# EUROPÄISCHE PATENTSCHRIFT

(11) **EP 4 014 743 B1**
(45) Veröffentlichungstag und Bekanntmachung des Hinweises auf die Patenterteilung: **15.11.2023**
(21) Anmeldenummer: 21210458.2
(22) Anmeldetag: 25.11.2021
(51) Int. Cl.: A22C 7/00, B26D 7/02, B26D 7/06, A22C 17/00

(54) **VERFAHREN ZUM VERPRESSEN UND AUFSCHNEIDEN EINES PRODUKT-STÜCKES**
METHOD FOR PRESSING AND CUTTING A PRODUCT PIECE
PROCÉDÉ DE COMPRESSION ET DE DÉCOUPE D'UNE PIÈCE PRODUIT

(30) Priorität: 21.12.2020 DE 102020134505
(43) Veröffentlichungstag der Anmeldung: 22.06.2022
(60) Teilanmeldung: 23154679.7
(73) Patentinhaber: TVI Entwicklung und Produktion GmbH, 83737 Irschenberg (DE)
(72) Erfinder: Mayr, Martin, 83549 Eiselfing (DE)
(74) Vertreter: Weickmann & Weickmann PartmbB

(56) Entgegenhaltungen:
- DE-A1-102018 106 300
- DE-B3-102019 110 313
- US-A- 4 967 652

## Beschreibung

### I. Anwendungsgebiet

Die Erfindung betrifft ein Verfahren zum Verpressen eines wegen des hohen Flüssigkeitsanteils so gut wie nicht kompressiblen Produkt-Stückes, bestehend aus einem Material, welches sich je nach Randbedingungen mehr elastisch oder mehr plastisch verhält, wie etwa ein Fleisch-Stück aus gewachsenem Fleisch, ein Verfahren zum Handhaben des Produkt-Stückes nach dem Verpressen sowie die dafür verwendete Aufschneidemaschine. Ein solches Produkt-Stück, das im Ausgangszustand über seine Länge einen sich ändernden Querschnitt aufweist, wird zu einem über die Länge gleichen Querschnitt verpresst, und anschließend aufgeschnitten in, insbesondere möglichst gewichtsgenaue, Scheiben.

### II. Technischer Hintergrund

Für die Zwecke der vorliegenden Erfindung wird im Folgenden häufig von Fleisch-Stücken gesprochen, ohne die Erfindung auf diese spezielle Art eines Produkt-Stückes zu beschränken.

Die Herstellung von gewichtsgenauen Scheiben oder Portionen aus einem Strang ist relativ einfach möglich, wenn der Strang über seine Länge überall den gleichen Querschnitt besitzt, deshalb Kaliber genannt, und aus einem homogenen, überall gleichen, begrenzt elastischen Material besteht, wie etwa Wurst oder Käse, welches darüber hinaus meist auch etwas komprimierbar ist, da es zu einem wesentlichen Teil aus koaguliertem Eiweiß besteht.

Hierfür sind so genannte Slicer bekannt, die meist mit einem rotierenden, runden oder spiralförmigen, Messer, welches z. B. quer zum Kaliber vor- und zurückgefahren werden kann, jeweils eine Scheibe abschneiden, während das dabei meist frei liegende Kaliber kontinuierlich vorwärtsgefahren wird.

Ein unregelmäßig geformtes Produkt-Stück aus gewachsenem Fleisch, z. B. eine Oberschale, hat diese Eigenschaften jedoch nicht, denn jedes Stück besitzt eine andere Größe und Gestaltung und darüber hinaus einen sich über die Länge ändernden Querschnitt und besteht aus Material-Anteilen unterschiedlicher Konsistenz, Elastizität und Komprimierbarkeit, beispielsweise aus Fett, Wasser, Muskelgewebe, der umgebenden Silberhaut und gegebenenfalls auch noch Knochen wie bei einem Kotelett-Strang, die sich mechanisch sehr unterschiedlich verhalten.

Darüber hinaus sollte klar sein, dass ein gewachsenes Fleisch-Stück in aller Regel ein länglicher Muskelstrang ist, der in seiner Längsrichtung, also der Verlaufsrichtung seiner Muskelfasern, eine sehr viel größere Verformbarkeit und Plastizität besitzt als quer hierzu, denn das Verlängern und Kaliber verkürzen des Muskels ist ja gerade dessen ursächliche Aufgabe.

In diesem Zusammenhang ist es bereits bekannt, ein solches unregelmäßig geformtes Produkt-Stück zunächst so zu verformen, dass es zumindest an dem Ende, an dem die nächste Scheibe abgeschnitten wird, vorzugsweise über die gesamte Länge, einen definierten, bekannten Querschnitt besitzt, insbesondere im Zeitpunkt des Abschneidens der Scheibe.

Dann kann eine Relation zwischen der einstellbaren Dicke der Scheibe und dem gewünschten Gewicht der Scheibe hergestellt werden, wenn auch nicht exakt, da sich von einer Scheibe zur Nächsten die Zusammensetzung des Fleisches, dessen Komponenten unterschiedliche spezifische Gewichte aufweisen, bereits ändern kann.

Um diese Verformung zu erreichen, wird das - in der Regel leicht angefrorene - Produkt-Stück meist zunächst in ein umfänglich geschlossenes Formrohr mit einem über die Länge gleichbleibenden inneren Querschnitt eingebracht, und in axialer Richtung mittels eines Längs-Pressstempels gegen einen Anschlag gepresst, sodass das Produkt-Stück den gesamten inneren Freiraum des Formrohres ausfüllt und somit auch dessen Querschnitt annimmt, also ein gleichmäßiges Produkt-Kaliber bildet.

Dabei können Formrohre unterschiedlichen Querschnittes benutzt werden, je nach dem Querschnitt und auch der Form des Produkt-Stückes.

Weiterhin kann zusätzlich der innere Querschnitt des Formrohres nach Einlegen des Produkt-Stückes verändert werden, beispielsweise indem zwei einander gegenüberliegende Seitenwände des Formrohres aufeinander zu bewegt werden, und damit auch eine Querverpressung des Produkt-Stückes bewirkt wird.

Meist wird hierfür - in Längsrichtung betrachtet - in die offene Seite einer Formrohr-Rinne ein passender Quer-Pressstempel radial eingefahren, der somit Bestandteil der Wandung des Formrohres ist.

Denn beginnend bei einem bestimmten Ausgangs-Querschnitt des inneren Freiraumes des Formrohres ist bei Verpressung in nur einer Richtung, beispielsweise nur in Längsrichtung, eine wesentlich stärkere Verpressung durch Verkürzung des Produkt-Stückes notwendig, als bei einer Aufteilung des Umform-Vorganges auf zwei oder gar drei verschiedene Pressrichtungen.

Dadurch wird die innere Struktur des Produkt-Stückes geschont, die oft eine gerichtete Struktur ist, beispielsweise bei dem Muskel-Anteil eines länglichen Fleisch-Stückes gerichtet in Richtung der größten Erstreckung des Fleisch-Stückes, seiner Längsrichtung, die ja in etwa die Verlaufsrichtung der Muskelfasern ist. Das Fleisch-Stück wird so in das Formrohr eingelegt, dass seine Längsrichtung mit der Längs-Pressrichtung und der Vorschubrichtung beim anschließenden Aufschneiden in etwa übereinstimmt.

Am Ende der Verpressung wird aus der Position der Pressstempel auch Querschnitt und Länge und damit Volumen und Gewicht des verpressten Produkt-Stückes errechnet, um die Dicke einer Scheibe festzulegen, die ein bestimmtes Gewicht aufweisen soll.

Dabei ist es aus der DE 10 2018 106 300 A1 bereits bekannt, sich beim Verpressen stufenweise und mit Entlastungsschritten dazwischen - um die Struktur des Fleisches zu schonen - mit steigender Presskraft der - meist für die einzelnen Pressrichtungen vorgegebenen - Maximal-Presskraft anzunähern.

Die Maximal-Presskraft muss gleich oder höher liegen als die Kaliber-Presskraft, bei der erst alle Hohlräume, z. B. in den Ecken des Formrohres, vom Material des Produkt-Stückes ausgefüllt sind.

Die Messkraft, die an den einzelnen Pressstempeln angelegt wird, um die Länge und den Querschnitt des verpressten Fleisch-Stückes endgültig zu ermitteln und daraus die notwendige Scheibendicke für ein vorgegebenes Scheibengewicht zu ermitteln, kann geringer sein als die Kaliber-Presskraft, da die beim Verpressen erzielte Formänderung wegen der nur teilweisen Plastizität des Materials auch bei einer wesentlich geringeren Messkraft erhalten bleibt.

Dabei besteht das Problem, dass das unter Druck stehende, so gut wie nicht kompressible Produkt-Kaliber wie etwa ein gewachsenes Fleischstück den Druck an die umgebenden Maschinenteile, also die Teile des Formrohres und die Pressstempel sowie den Anschlag, gegen den das Produkt-Stück verpresst wird, weitergibt und den Formrohr-Hohlraum aufzuweiten versucht, was im Jargon aufpumpen des Formrohres genannt wird.

Wird in seinem solchen aufgepumpten Maschinen-Zustand Länge und/oder Querschnitt des verpressten Produkt-Kalibers ermittelt und daraus die Soll-Dicke der abzutrennenden Scheiben, so weisen vor allem die ersten Scheiben meist starkes Übergewicht auf, da beispielsweise der im unbelasteten Zustand gemessene und zugrunde gelegte Quer-Abstand der Seitenwände der Formrohr-Rinne durch das Aufpumpen in Wirklichkeit größer war, auch beim Abtrennen der Scheibe, denn die vor allem am Längs-Pressstempel beim Aufschneiden angelegte Vorschub-Kraft zum Vorwärtsschieben des Produkt-Stückes entspricht meist etwa der Messkraft.

Die DE 10 2004 041 881 A1 beschreibt ebenfalls ein Verfahren zum Umformen eines unregelmäßig geformten, länglichen Produkt-Stückes aus einem teilweise elastischen Material indem es in seiner Längs- und Querrichtung in einem Formrohr zu einem Produktkaliber verpresst wird, welches einen über seine Länge gleichmäßigen Querschnitt aufweist. Allerdings wird dort weder vor dem Verpressen Gewicht und Länge vermessen um den durchschnittlichen Querschnitt zu ermitteln noch wird dort nach dem Vermessen eine Haltekraft eingestellt.

Ferner ist aus der US 4967652 A ein Verfahren gemäß dem Oberbegriff des Anspruchs 1 bekannt.

### III. Darstellung der Erfindung

### a) Technische Aufgabe

Es ist daher die Aufgabe gemäß der Erfindung, ein Verfahren zur Handhabung des Produkt-Stückes vor dem Verpressen zur Verfügung zu stellen, mittels dessen das Soll-Gewicht der Scheiben genauer erreicht werden kann.

### b) Lösung der Aufgabe

Diese Aufgabe wird durch die Merkmale des Anspruchs 1 gelöst. Vorteilhafte Ausführungsformen ergeben sich aus den Unteransprüchen.

Gemäß der Erfindung wird nicht nur das Gewicht, sondern auch die Länge des Produkt-Stückes ermittelt, bevor es in das Formrohr eingebracht wird, also im noch unverpressten Zustand.

Dies hat den Vorteil, dass ein durchschnittlicher Querschnitt des Produkt-Stückes im unverpressten Zustand ermittelt werden kann, und davon abhängig die Größe des freien inneren Querschnittes des Formrohres eingestellt werden kann auf eine Größe etwa im Bereich des ermittelten durchschnittlichen Querschnittes des unverpressten Produkt-Stückes.

Wenn anschließend das Produkt-Stück im Formrohr durch ein Verpressen in Längsrichtung zwischen einem Längs-Pressstempel und einem Anschlag am anderen Ende längsverpresst wird, wird hierbei nur eine relativ geringe Verformung des Produkt-Stückes in Querrichtung vollzogen.

Dies ist vorteilhaft und schont die innere Struktur des Produkt-Stückes, da die in Vorschubrichtung, der Längsrichtung des Produkt-Stückes, verlaufenden Muskelfasern zwar in Längsrichtung gut aneinander vorbeigeschoben werden können, aber ihre relative Lage zueinander in Querrichtung weniger leicht verändern können.

Dementsprechend ergeben die im verpressten Zustand - mittels der Stellung von Längs-Pressstempel und Quer-Pressstempel - ermittelte Länge und Querschnitt des nun gleichmäßigen Produkt-Kalibers realistische Werte, sodass die daraus berechnete Dicken-Einstellung für die abzutrennenden Scheiben Ist-Gewichte sehr nahe am Soll-Gewicht ergeben.

Im Bereich des durchschnittlichen Querschnittes soll dabei bedeuten, dass der innere freie Querschnitt des Formrohres auf einen Wert eingestellt wird, der maximal um +/- 30 %, besser maximal um +/- 20 %, besser maximal nur um +/- 10 % oder besser nur maximal um +/- 5 % vom durchschnittlichen Querschnitt des unverpressten Produkt-Stückes abweicht.

Vorzugsweise wird dabei eine Abweichung nur nach oben durchgeführt, oder als eingestellter freier Querschnitt wird der ermittelte durchschnittliche Querschnitt gewählt.

Dies hat sich in der Praxis am sinnvollsten erwiesen.

Für die Festlegung dieser Abweichung, insbesondere einer Abweichung nach oben, wird die Form des unverpressten Produkt-Stückes berücksichtigt, die er in der Regel innerhalb einer Charge von aufzuschneidenden Produkt-Stücken qualitativ in etwa gleichbleibt, wenn auch quantitativ unterschiedlich sein kann.

Auch die Konsistenz des Produkt-Stückes, insbesondere seine unterstellte Kompressibilität in Querrichtung, kann dabei mitberücksichtigt werden.

Wenn beispielsweise das Produkt-Stück in der Seitenansicht betrachtet stark ballig ist, also sein Querschnitt im mittleren Längenbereich sehr viel größer ist als an seinen Enden, so wird man die Abweichung, insbesondere die positive Abweichung, sehr klein halten oder keine positive Abweichung vornehmen, sondern sogar eine negative Abweichung.

Denn aufgrund der stark balligen Form könnten die Hohlräume im vorderen und hinteren Bereich kaum mehr ausgefüllt werden, ohne in diesen Bereichen die innere Struktur des Produkt-Stückes völlig aufzulösen, also zu zerstören, was nicht beabsichtigt ist. Ohne eine solche Zerstörung würden aber die Hohlräume nicht vollständig gefüllt werden, was dann wiederum eine falsche Soll-Dicke für die abzutrennenden Scheiben ergäbe.

Gemäß einem 2. Aspekt der nicht Teil der vorliegenden Erfindung ist, wird nach dem Verpressen des Produkt-Stückes zu einem gleichmäßigen Produkt-Kaliber anders vorgegangen als bisher bekannt:
Zum Verpressen des Produkt-Stückes, bis im Formrohr keine ungefüllten Hohlräume mehr verbleiben, wird eine Kraft benötigt, die als Kaliber-Presskraft bezeichnet wird.

Beim Verpressen wird also mindestens bis zu einer solchen Kaliber-Presskraft - die wie alle Presskräfte bei in verschiedenen Richtungen angreifenden Pressstempeln für jeden Pressstempel separat vorgegeben wird - verpresst, manchmal sogar mit einer etwas höheren Presskraft, der sogenannten Maximal-Presskraft. Damit möchte man erreichen, dass die Form des Kalibers nicht nur erreicht, sondern auch durch Überpressen noch besser stabilisiert wird, um beim anschließenden zurücknehmen der Presskraft die Rückverformung des Produkt-Kalibers - die aufgrund einer nur teilweisen Elastizität begrenzt ist, - möglichst gering zu halten.

Bei diesem 2. Aspekt wird nach dem Verpressen mit der Kaliber-Presskraft oder gar einer höheren Maximal-Presskraft nicht mit einer ebenso hohen Kraft als Messkraft gemessen, sondern zunächst die aufgebrachte Kaliber-Presskraft oder gar Maximal-Presskraft reduziert auf eine Haltekraft an den einzelnen Pressstempeln, deren Wert weniger als 50 % der zuvor aufgebrachten Kaliber-Messkraft oder Maximal-Presskraft ist.

Vorzugsweise wird die Haltekraft sogar nur auf einen Wert zwischen 10 % und 40 %, besser zwischen 10 % und 30 %, besser zwischen 10 % und 20 % der aufgewandten Maximal-Presskraft, insbesondere der Kaliber-Presskraft, eingestellt.

Da die Rückstellkräfte der verformten Teile der aufgepumpten Maschine, insbesondere des Formrohres, höher sind als diese Haltekraft, werden sich die verformten, in aller Regel elastischen, Teile in ihren nicht aufgepumpten Ausgangszustand zurück bewegen, wofür man ihnen vorzugsweise auch eine gewisse Haltezeit, also Einwirkzeit der niedrigeren Haltekraft, zugesteht, die aber so gering ist, nämlich eventuell nur 0,1 Sekunden, besser 0,3 Sekunden, besser 1,0 Sekunden oder besser 3,0 Sekunden, dass dadurch der Produktionsprozess nur relativ wenig verzögert wird.

Erst dann wird das Vermessen des verpressten Produkt-Kalibers hinsichtlich Länge und Querschnitt mittels der Stellung der entsprechenden Pressstempel durchgeführt, wobei beim Messen eine Messkraft angelegt wird, die etwa im Bereich der Haltekraft liegt.

Etwa im Bereich bedeutet in diesem Fall, dass die Messkraft um maximal 20 %, besser maximal 10 %, besser maximal 5 % über dem Wert der Haltekraft liegt oder insbesondere dem Wert der Haltekraft entspricht. Dies hat sich aus praktischen Erfahrungen als optimaler Bereich herausgestellt.

Vorzugsweise wird erfindungsgemäß das Verpressen in einem Formrohr durchgeführt, welches einen umfänglich geschlossenen, stirnseitig jedoch beidseits offenen Form-Hohlraum aufweist, der entlang seine Längsrichtung einen konstanten Querschnitt aufweist. Das Verpressen in Längsrichtung erfolgt mittels eines Längs-Pressstempels, der eine Fläche entsprechend dem Querschnitt des Form-Hohlraumes aufweist, in den dieser in Längsrichtung eingefahren wird.

Der Quer-Pressstempel bildet einen Teil der umfänglichen Wandung des Formrohres.

Falls der Längs-Pressstempel eine fixe Pressfläche aufweist, die in ihrer Größe nicht verstellbar ist, wird der Quer-Pressstempel auf eine von mehreren vorgegebenen Querpositionen eingefahren, die jeweils Querschnittsflächen entsprechen, für die jeweils ein Längs-Pressstempel vorhanden ist, der dann entsprechend getauscht werden muss.

Falls der Längs-Pressstempel in Richtung der Quer-Verpressung einen veränderbaren Querschnitt aufweist, ist dies nicht notwendig.

Der Steuerungs-Parameter für die Presshübe kann nur die Presskraft oder die Position des Pressstempels in seiner Pressrichtung sein. Vor allem in Längsrichtung wird der Steuerungs-Parameter eher die Presskraft sein, während wie oben dargestellt bei einem nicht veränderlichen Längs-Pressstempel der Steuerungsparameter für den Quer-Pressstempel ohnehin dessen anzufahrende Position sein muss.

Das Verpressen wird jeweils fortgesetzt, bis ein für den jeweiligen Presshub vorgegebener Zielwert des Steuerungs-Parameters erreicht ist, wobei der Zielwert in mehreren Stufen erreicht werden kann, und zwischen den Stufen auch Entlastungshübe, also ein Anhalten oder gar Zurückverfahren des entsprechenden Pressstempels, zur Schonung der Produkt-Struktur möglich ist.

Beim Vorwärtsfahren eines Pressstempel kann dies auch noch vor Erreichen des Zielwertes des Steuerungsparameters beendet werden, wenn die Vorschub-Geschwindigkeit des Pressstempels - insbesondere wenn der Steuerungsparameter die Presskraft ist - unter einen vorgegebenen Grenzwert absinkt, da dies bedeutet, dass dem Pressstempel ein sehr hoher Widerstand durch das Produkt-Stück entgegensteht.

Dementsprechend wird dies eher beim Längs-Verpressen als beim Quer-Verpressen der Fall sein.

Vorzugsweise kann eine Querverpressung nicht nur in einer sondern in zwei verschiedenen Querrichtungen zur Längs-Pressrichtung, der Vorschubrichtung beim Aufschneiden, durchgeführt werden oder zumindest in einer zweiten Querrichtung der Formrohrquerschnitt eingestellt werden zwischen einem großen Wert für das Einlegen des Produkt-Stückes und einem kleinen Wert, der etwa der Dicke des Produkt-Stückes in dieser Richtung entspricht.

Wenn nach dem Ermitteln der Länge und des Querschnittes des verpressten Produkt-Kalibers die Soll-Dicke für die Scheiben daraus ermittelt ist und das Produkt-Kaliber mit entsprechenden Dicken-Einstellungen für die Scheiben aufgeschnitten wird, die eine solche Soll-Dicke ergeben sollen, muss eine Vorschub-Kraft festgelegt werden, mit der der Längs-Pressstempel das Produkt-Kaliber im Formrohr zwischen dem Abtrennen der einzelnen Scheiben jeweils vorwärtsschiebt und gegen den Anschlag presst.

Diese Vorschub-Kraft muss natürlich ausreichend groß sein, um überhaupt ein Vorwärtsschieben im Formrohr zu bewirken, also die Haftreibung in Längsrichtung zwischen Produkt-Kaliber und Formrohr zu überwinden, die von vielen Faktoren abhängt. Vorzugsweise wird jedoch eine Vorschub-Kraft gewählt, die im Bereich der Messkraft liegt, insbesondere um 5 % bis 20 % über der Messkraft liegt.

Dies hat unter anderem den Vorteil, dass die an der Maschine vorzunehmende Dicken-Einstellung für die abzutrennende Scheibe, also meist der axiale Abstand zwischen dem vorderen Ende, dem Schneidende, des Formrohres und einer davor platzierten Anschlagplatte, in etwa der Soll-Dicke der nach dem Abtrennen wieder entspannten Scheibe entspricht, welche das Soll-Gewicht ergibt.

Die zur Durchführung des Verfahrens geeignete Aufschneide-Maschine, die nicht Bestandteil der vorliegenden Erfindung ist, umfasst - wie schon zum Verfahren dargelegt - bereits gemäß dem Stand der Technik ein an beiden Stirnseiten offenes Formrohr, in dem ein Längs-Pressstempel in Längsrichtung des Formrohres verschiebbar geführt ist, sowie einen Quer-Pressstempel, der einen Teil der Wandung des Formrohres darstellt, beispielsweise indem der Rest des Formrohres eine Formrohr-Rinne bildet, in deren offene Seite der Quer-Pressstempel passgenau einfahrbar ist.

Der freie innere Querschnitt des Formrohres ist vorzugsweise nicht rund, sondern weist meist zwei einander gegenüberliegende, parallel zueinander verlaufende Seitenwände auf und ist insbesondere rechteckig oder parallelogrammförmig, jeweils mit stark gerundeten Ecken.

Vorzugsweise besitzt der Längs-Pressstempel eine variable Erstreckung seiner Pressfläche in der Quer-Pressrichtung, in der sich der Quer-Pressstempel verfahren lässt und falls die beiden parallel zueinander verlaufenden Seitenwände der Formrohr-Rinne in ihrem gegenseitigen Abstand einstellbar sind, so müssen auch der Quer-Pressstempel und der Längs-Pressstempel eine in Querrichtung variable Größe besitzen, um sich an den Abstand zwischen den Wänden der Formrohr-Rinne anpassen zu können.

Die Maschine kann auch mehrere solcher Formrohre, die mit ihren Längsrichtungen parallel nebeneinander angeordnet sind, umfassen, deren Pressstempel und Pressverfahren dann vorzugsweise unabhängig voneinander steuerbar sind.

Insbesondere benötigt die Maschine einen Axial-Anschlag für das Produkt- Kaliber, gegen welchen der Längs-Pressstempel das Produkt-Kaliber verpressen kann, sowie eine Schneideinheit, vorzugsweise ein Messer, welches zum Abtrennen einer Scheibe in axialer Richtung vor dem vorderen Schneidende des Formrohres in Querrichtung zu dessen Längsrichtung bewegbar ist.

Der Axial-Anschlag verschließt vorzugsweise den Querschnitt des Formrohres vollständig, vorzugsweise bereits zu Beginn des Verpressens, und ist entweder unmittelbar an der schneidseitigen, vorderen Stirnfläche des Formrohres angeordnet, oder von dieser etwas zurückversetzt quer in das Formrohr einschiebbar als sogenannte Zwischenplatte.

Als Anschlagelement unmittelbar an der endseitigen Stirnfläche kann auch direkt diejenige Anschlagplatte verwendet werden, die beim anschließenden Aufschneiden des Produkt-Kalibers hinsichtlich ihrer Längs-Position zum Messer und/oder zum Formrohr die Dicke der abzutrennenden Scheibe vorgibt.

Vor allem aber umfasst eine solche gattungsgemäße Maschine auch eine Steuerung, die alle beweglichen Teile der Maschine steuert.

Die Steuerung der Maschine ist in der Lage, die beweglichen Teile der Maschine gemäß dem zuvor beschriebenen Verfahren zu steuern.

Hierfür kann die Maschine auch Sensoren umfassen, die Parameter messen, die für die Steuerung des Verfahrens von Bedeutung sind, beispielsweise Drucksensoren, Kraftsensoren oder Positionssensoren an den Pressstempeln, Drucksensoren oder Kraftsensoren in den Innenflächen des Formrohres und/oder an dem Längsanschlag.

### c) Ausführungsbeispiele

Ausführungsformen gemäß der Erfindung sind im Folgenden beispielhaft näher beschrieben. Es zeigen:
- **Figur 1a - c:**: eine Maschine zum Verpressen und Aufschneiden von Laiben in der Seitenansicht im Teilschnitt in unterschiedlichen Funktionsstellungen,
- **Figur 2a:**: ein Formrohr in der Seitenansicht im Schnitt,
- **Figur 2b:**: das Formrohr geschnitten entlang der Linie B - B der Figur 2a,
- **Figur 2c:**: das Formrohr geschnitten entlang der Linie C - C der Figur 2a,
- **Figur 2d:**: ein mehrspuriges Formrohr mit veränderlicher Breite.

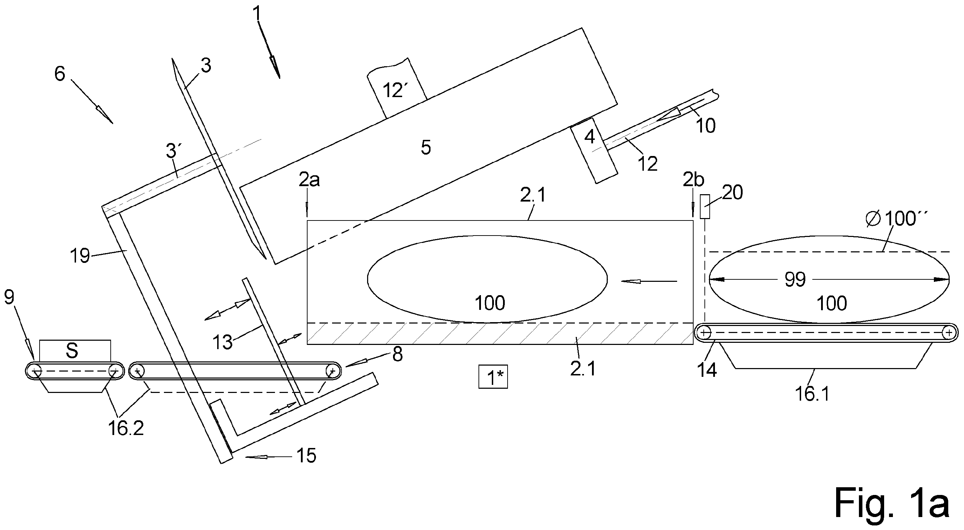

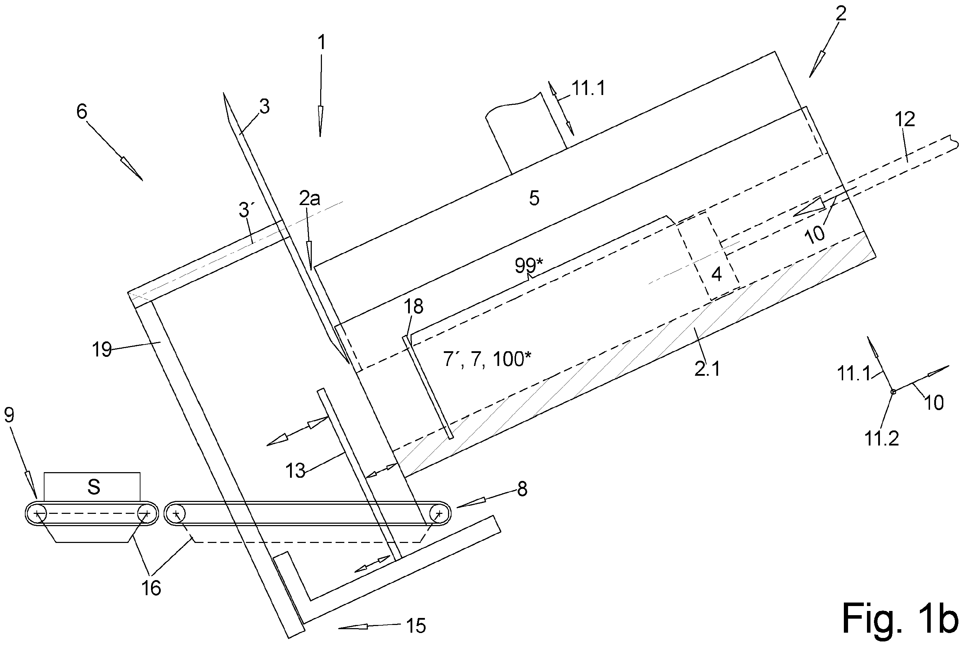

In den **Figuren 1a****, b** ist - wie am Besten in **Figur 1b** zu erkennen - die gesamte Schneidemaschine 1 dargestellt, die außer dem Formrohr 2 und den Pressstempeln 4, 5 eine Schneideinheit 6 umfasst zum Abtrennen von Scheiben 101 von dem verpressten Produkt-Kaliber 100*.

Hinsichtlich des Formrohres 2 ist zu erkennen, dass das Formrohr 2 in **Figur 1b** schräg nach unten abwärtsgerichtet angeordnet ist, und zusätzlich nahe des Schneid-Endes 2a des Formrohres 2 eine Zwischenplatte 18 so im Formrohr 2 eingebracht werden kann, dass sie dessen gesamten freien Querschnitt 7' seines inneren Freiraumes 7 verschließt. Dies dient dazu, um beim Verpressen des Produkt-Stückes 100 diesen nicht gegen die an das Formrohr 2 herangefahrene Anschlagplatte13 verpressen zu müssen, sondern gegenüber dieser stabiler im Formrohr 2 selbst gelagerten Zwischenplatte 18.

Da deren Position in Längsrichtung 10 bekannt ist, kann dennoch aus den Positionen der Pressstempel 4, 5 in deren Pressrichtungen 10. 11.1 im verpressten Zustand auf die Länge 99 des Produkt-Stückes 100 in Längsrichtung 10 und dessen Querschnittsfläche 100' und Gestaltung der Querschnittsfläche in den Querrichtungen 11.1, 11.2, die im rechten Winkel zueinander und lotrecht zur Längsrichtung 10 stehen, geschlossen werden.

Wie **Figur 1a** zeigt, ist zum Erleichtern des Beladens die Formrohr-Rinne 2.1 herabklappbar in eine horizontale Lage um eine in ihrem vorderen Bereich, hier der Unterkante am Schneid-Ende 2a des Formrohres 2 gelegene, in der zweiten Querrichtung 11.2 verlaufende Schwenkachse, während Quer-Pressstempel 5 und Längs-Pressstempel 4 in der ursprünglichen Lage verbleiben.

In dieser herabgeklappten Anordnung der Formrohr-Rinne 2.1 kann - etwa mittels des dargestellten Zuförderers 14 - ein neues Produkt-Stück 100 vom hinteren, beladeseitigen Ende 2b an die Formrohr-Rinne 2.1 herangefahren und in diese eingeschoben werden.

Dabei kann durch eine von oben auf den Zuförderer 14 gerichtete Lichtschranke 20 oder auch eine Laserlinie beim Durchfahren des Produkt-Stückes zumindest dessen Anfang und dessen Ende detektiert werden, worauf aufgrund der Geschwindigkeit des zu Förderers 14 die Länge 99 des Produkt-Stückes 100 im unverpressten Zustand bekannt ist.

Das Gewicht kann ermittelt werden, indem der Zuförderer 14 mit einer Waage 16.1 ausgestattet ist.

Aus Gewicht und der Länge 99 kann die Steuerung 1 *den durchschnittlichen Querschnitt (Ǿ100") des unverpressten Produkt-Stückes 100 errechnen.

Anschließend wird die Formrohr-Rinne 2.1 mit dem Produkt-Stück 100 wieder nach oben in die Pressstellung parallel verlaufend zur Längs-Pressrichtung 10 geschwenkt, wobei sich der Quer-Pressstempel 5 und Längs-Pressstempel 4 jeweils in ihrer maximal zurückgezogenen Position befinden, in der sie gerade noch in diese Formrohr-Rinne 2.1 eintauchen, um beim Hochschwenken der Formrohr-Rinne 2.1 nicht mit dem darin befindlichen unverpressten Produkt-Stück 100 zu kollidieren.

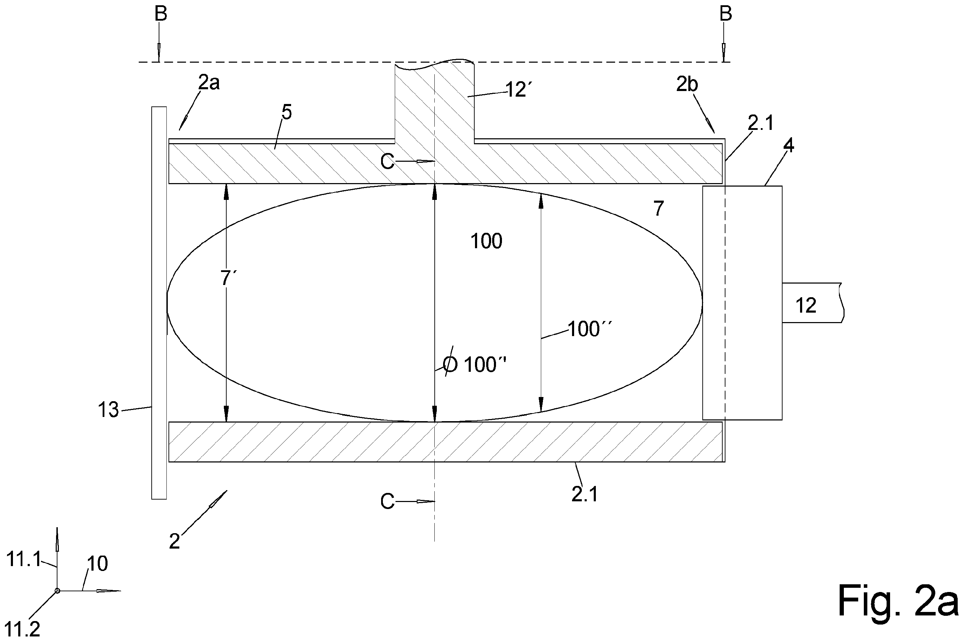

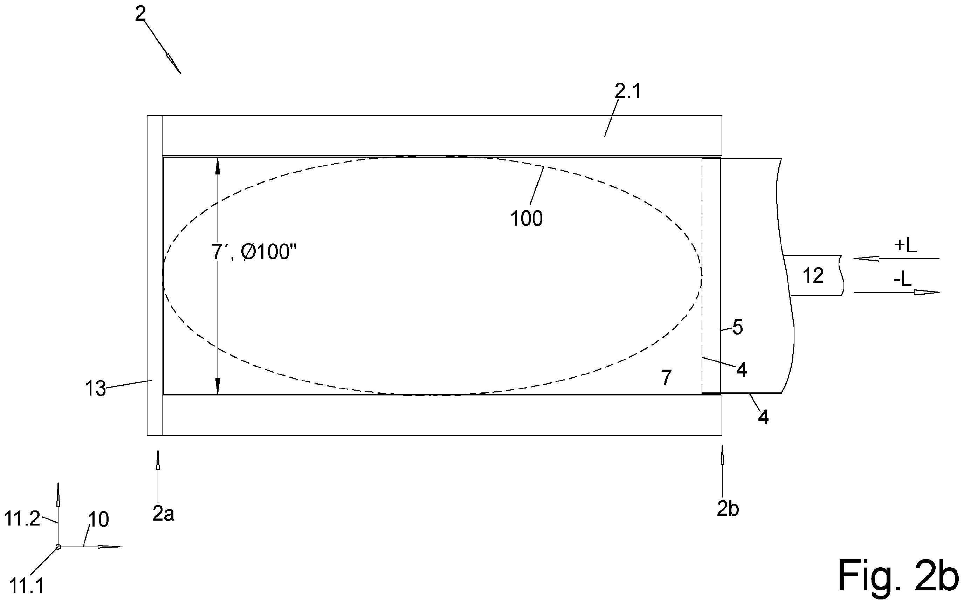

Die **Figuren 2a** **und** **2b** zeigen das Formrohr 2 alleine in Prinzip-Darstellung in einem vertikalen Längsschnitt und in der Aufsicht von oben.,

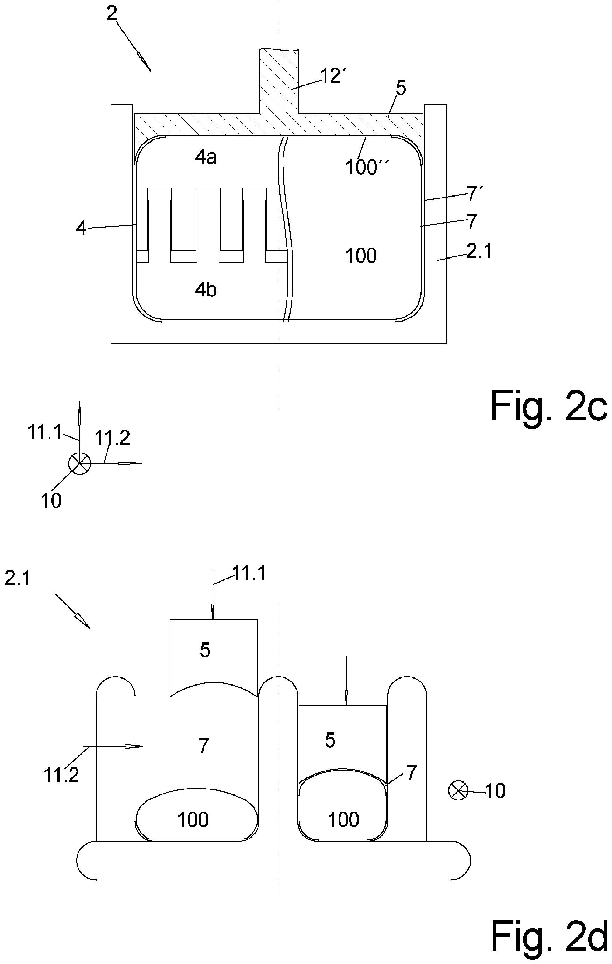

Die Formrohr-Rinne 2 besteht - wie die in Querrichtung zur Längsrichtung 10 geschnittene Ansicht gemäß **Figur 2c** zeigt - aus einer in diesem Querschnitt U-förmigen Formrohr-Rinne 2.1, in die von der offenen Seite her, in der Regel von oben, passgenau ein Quer-Pressstempel 5 eintaucht, die gemeinsam das stirnseitig vorne und hinten offene Formrohr 2 bilden.

Wie **Figur 2c** erkennen lässt, verlaufen die Innenflächen der Seitenwände der U-förmigen Formrohr-Rinne 2.1 parallel zueinander, und in **Figur 2c** in einem nicht veränderbaren Abstand, sodass der Quer-Pressstempel 5 in Richtung der Breite der Öffnung der Formrohr-Rinne 2.1, der zweiten Querrichtung 11.2, eine fixe Breite besitzen kann, und ebenso in der Länge 10 eine fixe Länge besitzen kann, nämlich z.B. entsprechend der Länge der Formrohr-Rinne 2.1.

In **Figur 2a** ist der Quer-Pressstempel 5 auf seinen solchen Abstand zum Boden der Formrohr-Rinne 2.1 herangefahren, dass der freie Querschnitt 7' dazwischen dem durchschnittlichen Querschnitt des unverpressten Produkt-Stückes 100 entspricht. Folglich ist dadurch das Produkt-Stück 100 in Querrichtung 11.1 bereits etwas zusammengedrückt, und besitzt eine Länge die - ohne Presskraft in Längsrichtung 10 - etwas größer ist als die Länge 99* im unverpressten Zustand. Das Produkt-Stück 100 besitzt aber qualitativ immer noch gemäß seinem Ausgangszustand eine etwa länglich-eiförmige Form oder auch die Form eines American Football, mit einem Querschnitt 100", der sich in Längsrichtung 10 ändert und im mittleren Längenbereich immer noch größer ist als an seinen Enden.

Mit einer solchen Einstellung des inneren freien Querschnitt 7' wird anschließend gemäß **Figur 1b** das Produkt-Stück 100 zunächst gegen die Zwischenplatte 18 oder gemäß **Figur 2b** gegen die Anschlagplatte 13 am vorderen Ende 2a des Formrohres 2 mittels des Längs-Pressstempels 4 vorwärts geschoben.

Erst durch weiteres Vorwärtsfahren der Pressstempel 4, 5 erfolgt dann das Verpressen des Produkt-Stückes 100 zu dem in **Figur 1b** eingezeichneten Produkt-Kaliber 100* in Längsrichtung 10, bis der gesamte Form-Hohlraum 7 des Formrohres 2 bis zum Anschlag 13 oder 18 vom Material des Produkt-Stückes 100 ausgefüllt ist und welches dann eine deutlich geringere Länge 99* besitzt.

Das Vermessen der Länge und des Querschnittes des Produkt-Kalibers 100* im verpressten Zustand wird jedoch wie beschrieben nicht unter der Krafteinwirkung, insbesondere am Längs-Pressstempel 4, durchgeführt, die zum Verpressen notwendig war, sondern mit einer demgegenüber deutlich geringeren Messkraft.

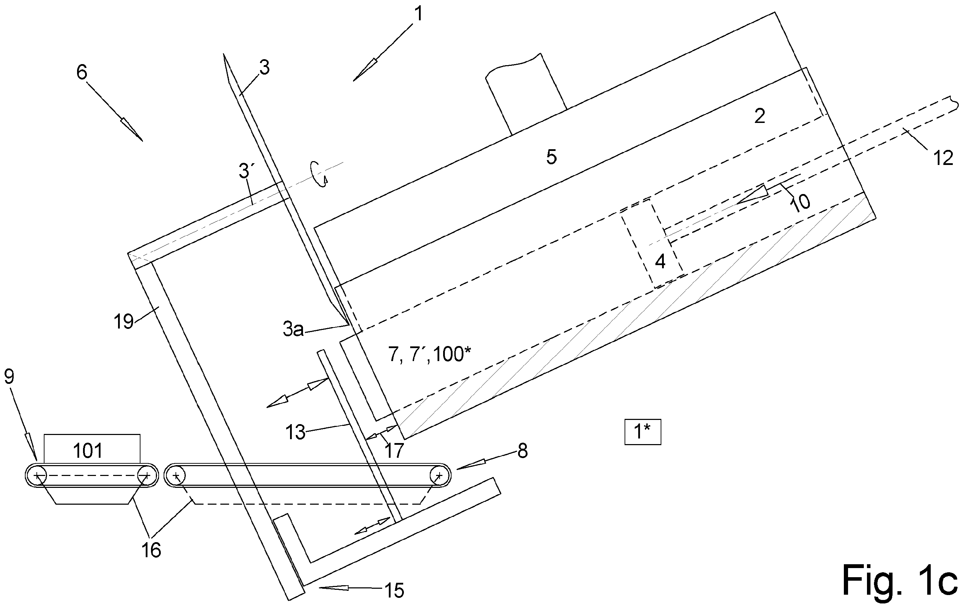

**Figur 1c** zeigt das - nach Entfernen der Zwischenplatte 18 - anschließende automatische Aufschneiden des verpressten Produkt-Kalibers 100* in Scheiben 101.

Hierzu wird - nach Entfernen der Zwischenplatte 18 - das verpresste Produkt-Kaliber 100* mittels des Längs-Pressstempels 4 mit einer Schneidekraft, die vorzugsweise der Messkraft entspricht, weiter vorwärts geschoben, und zwar über das Schneid-Ende 2a des Formrohres 2 um eine gewünschte ScheibenDicke hinaus, sodass das Produkt-Kaliber 100* mit seiner vorderen Stirnfläche an einer auf einen entsprechenden Abstand 17 zum Formrohr 2 eingestellten Anschlagplatte 13 anliegen sollte.

Wenn in Längsrichtung 10 die Stellung des Produkt-Kalibers 100* zum Abtrennen der nächsten Scheibe 101 auf diese Art und Weise erreicht ist, taucht die Schneidkante 3a eines in diesem Fall um eine Messerachse 3' rotierenden, runden oder sichelförmigen, Messers 3 zunehmend in Querrichtung 11.1 in den Querschnitt des Produkt-Kalibers 100* ein und trennt eine Scheibe 101 ab.

Beim Eintauchen des Messers 3 wird auch die Anschlagplatte 13 in der gleichen Querrichtung bewegt, sodass die abgetrennte Scheibe 101 über die Oberkante der Anschlagplatte 13 herabkippen und auf den unmittelbar darunter befindlichen Abförderer 8 fallen kann, der diese abtransportiert und an einen weiteren Abförderer 9 übergibt. Einer der beiden Abförderer, vorzugsweise der nachgelagerte Abförderer 9, umfasst eine Waage 16 zum Wiegen der einzelnen erzeugten Scheiben 101, und deren Gewicht kann an die Steuerung 1* der Maschine 1 rückgemeldet werden, zum automatischen Korrigieren der Dicke der nachfolgenden Scheiben 101 durch Verändern des Abstandes 17.

Zu diesem Zweck sind sowohl das Messer 3 als auch die Anschlagplatte 13 beweglich an einem Grundgestell 15 der Schneideinheit 6 montiert, entlang dem die Anschlagplatte 13 in Längsrichtung 10 in ihrem Abstand 17 verstellbar ist, und entlang dem auch das an einem Tragarm 19 gehaltene Messer 3 zumindest in einer der Querrichtungen zur Längsrichtung 10, vorzugsweise der ersten Querrichtung 11.1, der Quer-Pressrichtung des Quer-Pressstempels 5, verfahrbar ist.

Damit der Längs-Pressstempel 4 - der ja beim Verpressen oder Vorwärtsschieben zwischen dem Quer-Pressstempel 5 und der Formrohr-Rinne 2.1 angeordnet ist - unabhängig von der Position des Quer-Pressstempels 5 in Quer-Pressrichtung, der 1. Querrichtung 11.1, den freien Querschnitt 7' zwischen der Formrohr-Rinne 2.1 und dem Quer-Pressstempel 5 immer vollständig ausfüllt, besteht er beispielsweise - wie in **Figur 2c****, linke Hälfte** dargestellt - aus zwei Teilen 4a, 4b, die auf der einander zugewandten Seite abwechselnd Zinken und Ausnehmungen aufweisen, die ineinander eintauchen, so dass dadurch der Quer-Pressstempel 5 seine Erstreckung in dieser Querrichtung 11.1 verändern kann, was automatisch geschieht, da die beiden Teile 4a, b mittels Federn in die voneinander wegweisende Richtung vorgespannt sind.

**Figur 2d** zeigt, wie zum Aufschneiden von zwei Produkt-Stücken 100 nebeneinander 2 die Formrohr-Rinnen vorhanden sein können, wobei die mittlere von 3 von einem Boden aufragenden Seitenwänden fest, insbesondere einstückig, mit diesem verbunden ist, sich die beiden äußeren Seitenwände dagegen in der 2. Querrichtung 11.2 in ihrem Abstand zu dieser verstellen lassen von einem großen Abstand zum Einlegen des Produkt-Stückes 100 und einem kleineren zum anschließenden Verpressen des Produkt-Stückes 100, der dann auch der Breite des von oben in die jeweilige Formrohr-Rinne 2.1 einzufahrenden Quer-Pressstempels 5 entspricht.

### BEZUGSZEICHENLISTE

- **1**: Schneidemaschine
- **1***: Steuerung
- **2**: Formrohr
- **2.1**: Formrohr-Rinne
- **2a**: Schneid-Ende
- **2b**: Belade-Ende
- **3**: Messer
- **3'**: Messer-Achse
- **3"**: Messer-Ebene
- **3a**: Schneidkante
- **4**: Längs-Pressstempel
- **5**: Quer-Pressstempel
- **6**: Schneideinheit
- **7**: innerer Freiraum
- **7'**: innerer freier Querschnitt
- **8**: Abförderer
- **9**: Abförderer
- **10**: Längsrichtung, axiale Richtung, Vorschubrichtung
- **11.1**: erste Querrichtung
- **11.2**: zweite Querrichtung
- **12, 12'**: Kolbenstange
- **13**: Anschlagplatte
- **14**: Zuförderer
- **15**: Grundgestell
- **16**: Waage
- **17**: Abstand
- **18**: Zwischenplatte
- **19**: Tragarm
- **20**: Lichtschranke
- **99**: unverpresste Länge
- **99***: verpresste Länge
- **100**: unverpresstes Produkt-Stück
- **100***: verpresstes Produkt-Kaliber
- **100"**: Querschnitt
- **100"max**: maximaler Querschnitt
- **101**: Scheibe

- Dmax: maximale Dicke, maximale Durchmesser
- K: Messekraft
- K: Vorschubkraft

## Patentansprüche

1. **Verfahren** zum Umformen eines unregelmäßig geformten, länglichen Produkt-Stückes (100) aus einem teilweise elastischen Material, z.B. ein Fleisch-Stück (100) aus gewachsenem Fleisch, indem das Produkt-Stück (100)
- in seiner Längsrichtung (10) sowie
- in mindestens einer Querrichtung (11.1, 11.2) zur Längsrichtung (10) in einem Formrohr (2) zu einem Produkt-Kaliber (100*) verpresst wird, welches einen über seine Länge (99*) weitestgehend gleichmäßigen Querschnitt (fÖ 100*) aufweist,
wobei vor dem Verpressen des Produkt-Stückes (100)
- dessen Gewicht sowie die Länge (99) in Vorschubrichtung vor dem Verpressen ermittelt wird,
- das Produkt-Stück (100) in das Formrohr (2) eingebracht wird,
- anschließend das Verpressen des Produkt-Stückes (100) in Längsrichtung bis zum Erreichen eines über seine Länge (99*) gleichmäßigen Querschnitts (Ǿ100") durchgeführt wird,
**dadurch gekennzeichnet, dass**
- aus dem Gewicht sowie der Länge (99) der durchschnittliche Querschnitt (Ǿ100") des Produkt-Stückes (100) im unverpressten Zustand ermittelt wird,
- nach dem Einbringen des Produkt-Stückes (100) in das Formrohr (2) der innere freie Querschnitt des Formrohres (2) auf einen Wert im Bereich dieses durchschnittlichen Querschnittes (Ǿ100") eingestellt wird.

2. Verfahren nach Anspruch 1,
**dadurch gekennzeichnet, dass**
- der Wert maximal um +/- 30 %, besser maximal +/- 20 %, besser maximal +/-10 %, besser maximal +/-5 % vom durchschnittlichen Querschnitt (Ǿ100") abweicht,
- insbesondere nur nach oben abweicht.

3. Verfahren nach einem der vorhergehenden Ansprüche,
**dadurch gekennzeichnet, dass**
- die Abweichung des einzustellenden Formrohr-Querschnittes relativ zum durchschnittlichen Querschnitt (Ǿ100") des unverpressten Produkt-Stückes (100) in Abhängigkeit der Form des unverpressten Produkt-Stückes (100) durchgeführt wird,
- insbesondere die Abweichung positiv umso größer ist, je größer der Querschnitt im mittleren Längenbereich im Vergleich zum Querschnitt an den Enden des unverpressten Fleisch-Stückes (100) ist.

4. Verfahren nach einem der vorhergehenden Ansprüche,
**dadurch gekennzeichnet, dass**
- das Verpressen in einem Formrohr (2) mit einem umfänglich geschlossenen, stirnseitig beidseits offenen Form-Hohlraum, welcher entlang seiner Längsrichtung (10a) einen konstanten Querschnitt aufweist, durchgeführt wird mittels
- eines Quer-Pressstempels (5), der in einer Querrichtung (11.1, 11.2) des Formrohres (2) bewegbar ist sowie
- einem Längs-Pressstempel (4), der in der Längsrichtung (10a) des Formrohres (2) bewegbar ist.

5. Verfahren nach einem der vorhergehenden Ansprüche,
**dadurch gekennzeichnet, dass**
- ein Steuerungs-Parameter für die Presshübe die Presskraft oder Position des Pressstempels (4, 5) in seiner Pressrichtung ist,
- insbesondere der Steuerungs-Parameter für die Hübe die Presskraft ist.

6. Verfahren nach Anspruch 5,
**dadurch gekennzeichnet, dass**
- das Verpressen in jedem Presshub fortgesetzt wird, bis ein für diesen Hub vorgegebener Hub-Zielwert des Steuerungs-Parameters erreicht ist,
- das Verpressen insgesamt fortgesetzt wird, bis ein End-Zielwert des Steuerungs-Parameters erreicht ist, wobei der End-Zielwert insbesondere der Hub-Zielwert des letzten Hubes in dieser Richtung ist, der insbesondere eine Messkraft ist.

7. Verfahren nach Anspruch 6,
**dadurch gekennzeichnet, dass**
- bei einem Presshub der Pressschritt noch vor Erreichen des Hub-Zielwertes der Presskraft angehalten wird, wenn die Vorschub-Geschwindigkeit des mit dem Hub-Zielwert der Presskraft beaufschlagten Pressstempels (4, 5) unter einen vorgegebenen Grenzwert absinkt,
- insbesondere beim Längs-Pressstempel (4), sofern der Längs-Pressstempel (4) in der Quer-Pressrichtung (11.1, 11.2) eine variable Erstreckung besitzt.

8. Verfahren nach einem der vorhergehenden Ansprüche,
**dadurch gekennzeichnet, dass**
- in einer anderen Querrichtung (11.2) die auf der Quer-Pressrichtung (11.1) gemäß einem der vorhergehenden Ansprüche senkrecht steht, ein Quer-Begrenzungsstempel wenigstens an den Laib (100) angelegt wird, insbesondere darüber hinaus in dieser anderen Querrichtung (11.2) vorwärtsgeschoben wird,
- insbesondere bis zu einer von insbesondere mehreren Zielpositionen in dieser anderen Querrichtung (11.2).

9. Verfahren nach einem der vorhergehenden Ansprüche, wobei
- aus einer im verpressten Zustand ermittelten Länge und Querschnitt die Soll-Dicke der Scheiben für ein vorgegebenes Scheiben-Gewicht ermittelt wird,
- das Produkt-Kaliber mit einer solchen Dicken-Einstellung in Scheiben aufgeschnitten wird, welche Scheiben mit der Soll-Dicke ergeben soll, **dadurch gekennzeichnet, dass**
- das Aufschneiden in Scheiben mit einer Vorschub-Kraft durchgeführt wird, die gleich oder höher als die Messkraft ist,
- insbesondere um 5 % bis 20 % über der Messkraft liegt.

## Claims

1. A **method** of reshaping an irregularly shaped, elongated product piece (100) from a partially elastic material, e.g. a meat piece (100) of grown meat, in which the product piece (100) is pressed
- in its longitudinal direction (10) as well as
- in at least one transverse direction (11.1, 11.2) relative to the longitudinal direction (10)
in a shaping tube (2) to form a product caliber (100*) which has a cross section (Ǿ 100*) which is largely uniform over its length (99*),
wherein prior to the pressing of the product piece (100)
- its weight as well as the length (99) in advancing direction is determined prior to the pressing,
- the product piece (100) is inserted into the shaping tube (2)
- the product piece (100) is then pressed in the longitudinal direction until a cross section (Ǿ100") is obtained which is uniform over its length (99*),
**characterized in that**
- the average cross section (Ǿ100") of the product piece (100) in the unpressed state is determined from the weight and the length (99),
- after the product piece (100) has been inserted into the shaping tube (2), the inner free cross section of the shaping tube (2) is set to a value in the range of this average cross section (Ǿ100").

2. The method according to claim 1,
**characterized in that**
- the value deviates from the average cross section (Ǿ100") by a maximum of +/- 30%, better by a maximum of +/- 20%, better by a maximum of +/-10%, better by a maximum of +/-5%,
- in particular only deviates upwards.

3. The method according to one of the preceding claims, **characterized in that**
- the deviation of the shaping tube cross section to be adjusted relative to the average cross section (Ǿ100") of the unpressed product piece (100) is carried out as a function of the shape of the unpressed product piece (100),
- in particular the deviation is positively greater the greater the cross section in the central length region is in comparison with the cross section at the ends of the unpressed piece of meat (100).

4. The method according to any of the preceding claims, **characterized in that**
- the pressing is carried out in a shaping tube (2) with a circumferentially closed shaping tube cavity which is open at both ends and has a constant cross section along its longitudinal direction (10a), by means of
- a cross press stamp (5) movable in a transverse direction (11.1, 11.2) of the shaping tube (2) and
- a longitudinal press stamp (4) movable in the longitudinal direction (10a) of the shaping tube (2).

5. The method according to one of the preceding claims, **characterized in that**
- a control parameter for the pressing strokes is the pressing force or the position of the pressing stamp (4, 5) in its pressing direction,
- in particular the control parameter for the strokes is the pressing force.

6. The method according to claim 5,
**characterized in that**
- the pressing is continued in each pressing stroke until a stroke target value of the control parameter predetermined for this stroke is reached,
- the pressing is continued as a whole until a final target value of the control parameter is reached, the final target value being in particular the stroke target value of the last stroke in this direction, which is in particular a measuring force.

7. The method according to claim 6,
**characterized in that**
- in the case of a pressing stroke, the pressing step is stopped even before the stroke target value of the pressing force is reached if the advancing speed of the pressing stamp (4, 5) to which the stroke target value of the pressing force is applied drops below a predetermined limit value,
- in particular in the case of the longitudinal press stamp (4), provided that the longitudinal press stamp (4) has a variable extension in the cross press direction (11.1, 11.2).

8. The method according to one of the preceding claims,
**characterized in that**
- in another transverse direction (11.2) which is perpendicular to the transverse pressing direction (11.1) according to one of the preceding claims, a transverse limiting stamp is applied at least to the loaf (100), in particular is pushed forward in this other transverse direction (11.2),
- in particular to one of in particular several target positions in this other transverse direction (11.2).

9. The method according to one of the preceding claims, wherein
- the target thickness of the slice for a given slice weight is determined from a length and cross section determined in the pressed state,
- the product caliber is cut into slices with such a thickness setting which is to yield slices with the nominal thickness,
**characterized in that**
- the slicing is carried out with an advancing force which is equal to or greater than the measuring force,
- in particular by 5 % to 20 % above the measuring force.

## Revendications

1. **Procédé** de formage d'une pièce de produit (100) allongée, de forme irrégulière, en un matériau partiellement élastique, par exemple une pièce de viande (100) en viande cultivée, en faisant en sorte que la pièce de produit (100)
- dans sa direction longitudinale (10) ainsi que
- dans au moins une direction transversale (11.1, 11.2) par rapport à la direction longitudinale (10)
est pressée dans un tube de formage (2) pour obtenir un calibre de produit (100*) qui présente une section transversale (Ǿ100*) largement uniforme sur sa longueur (99*),
dans lequel, avant le pressage de la pièce de produit (100)
- son poids ainsi que sa longueur (99) dans la direction d'avancement sont déterminés avant le pressage,
- la pièce de produit (100) est introduite dans le tube de formage (2),
- on procède ensuite au pressage de la pièce de produit (100) dans la direction longitudinale jusqu'à l'obtention d'une section transversale (Ǿ100") uniforme sur sa longueur (99*),
**caractérisé en ce que**
- la section transversale moyenne (Ǿ100") de la pièce de produit (100) à l'état non pressé est déterminée à partir du poids ainsi que de la longueur (99),
- après l'introduction de la pièce de produit (100) dans le tube de formage (2), la section transversale libre intérieure du tube de formage (2) est réglée à une valeur dans la plage de cette section transversale moyenne (Ǿ100").

2. Procédé selon la revendication 1, **caractérisé en ce que**
- la valeur s'écarte au maximum de +/- 30 %, mieux au maximum de +/- 20 %, mieux au maximum de +/-10 %, mieux au maximum de +/-5 % de la section transversale moyenne (Ø100"),
- en particulier ne s'écarte que vers le haut.

3. Procédé selon l'une des revendications précédentes,
**caractérisé en ce que**
- l'écart de la section transversale du tube de formage à régler par rapport à la section transversale moyenne (Ø100") de la pièce de produit non pressée (100) est effectué en fonction de la forme de la pièce de produit non pressée (100),
- en particulier, l'écart positif est d'autant plus grand que la section transversale dans la zone de longueur moyenne est grande par rapport à la section transversale aux extrémités de la pièce de viande non pressée (100).

4. Procédé selon l'une des revendications précédentes,
**caractérisé en ce que**
- le pressage est effectué dans un tube de formage (2) avec une cavité de formage fermée sur le pourtour, ouverte des deux côtés sur les côtés frontaux, qui présente une section transversale constante le long de sa direction longitudinale (10a), au moyen de
- un poinçon de pressage transversal (5), mobile dans une direction transversale (11.1, 11.2) du tube de formage (2), ainsi que
- un poinçon de pressage longitudinal (4) mobile dans la direction longitudinale (10a) du tube de formage (2).

5. Procédé selon l'une des revendications précédentes,
**caractérisé en ce que**
- un paramètre de commande des courses de pressage est la force de pressage ou la position du poinçon de pressage (4, 5) dans sa direction de pressage,
- en particulier, le paramètre de commande des courses est la force de pressage.

6. Procédé selon la revendication 5,
**caractérisé en ce que**
- le pressage est poursuivi dans chaque course de pressage jusqu'à ce qu'une valeur cible de course du paramètre de commande prédéfinie pour cette course soit atteinte,
- le pressage est poursuivi globalement jusqu'à ce qu'une valeur cible finale du paramètre de commande soit atteinte, la valeur cible finale étant, notamment la valeur cible de course de la dernière course dans cette direction, qui est notamment une force de mesure.

7. Procédé selon la revendication 6,
**caractérisé en ce que**
- lors d'une course de pressage, l'étape de pressage est arrêtée avant même que la valeur cible de la course de la force de pressage ne soit atteinte, lorsque la vitesse d'avance du poinçon de pressage (4, 5) soumis à la valeur cible de la course de la force de pressage descend en dessous d'une valeur limite prédéfinie,
- en particulier pour le poinçon de pressage longitudinal (4), dans la mesure où le poinçon de pressage longitudinal (4) possède une extension variable dans la direction de pressage transversale (11.1, 11.2).

8. Procédé selon l'une des revendications précédentes,
**caractérisé en ce que**
- dans une autre direction transversale (11.2) perpendiculaire à la direction de pressage transversale (11.1) selon l'une des revendications précédentes, on applique un poinçon de limitation transversale au moins contre la miche (100), notamment en avançant au-delà dans cette autre direction transversale (11.2),
- notamment jusqu'à une position cible parmi notamment plusieurs positions cibles dans cette autre direction transversale (11.2).

9. Procédé selon l'une des revendications précédentes, dans lequel
- à partir d'une longueur et d'une section transversale déterminées à l'état pressé, on détermine l'épaisseur de consigne des tranches pour un poids de tranche prédéfini,
- le calibre du produit est découpé en tranches avec un tel réglage de la lame, qui doit donner des tranches ayant l'épaisseur de consigne,
**caractérisé en ce que**
- le découpage en tranches est effectué avec une force d'avance égale ou supérieure à la force de mesure,
- est notamment supérieure de 5 % à 20 % à la force de mesure.
